(19) Europäisches Patentamt
European Patent Office
Office européen des brevets

(11) **EP 4 685 860 A1**

(12) **EUROPEAN PATENT APPLICATION**

(43) Date of publication:
**28.01.2026 Bulletin 2026/05**

(21) Application number: **25181901.7**

(22) Date of filing: **10.06.2025**

(51) International Patent Classification (IPC):
**H01M 4/04** (2006.01)  **H01M 4/139** (2010.01)

(52) Cooperative Patent Classification (CPC):
**H01M 4/0404; H01M 4/0402; H01M 4/139;**
**Y02E 60/10**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **10.06.2024 KR 20240075301**

(71) Applicants:
• **SK On Co., Ltd.**
**Seoul 03161 (KR)**
• **C&C ENG Co., Ltd.**
**Busan 49460 (KR)**

(72) Inventors:
• **JO, Byoung Wook**
**34124 Daejeon (KR)**

• **PARK, Sung Jun**
**34124 Daejeon (KR)**
• **KIM, In Ha**
**34124 Daejeon (KR)**
• **YIM, Hyung Joo**
**34124 Daejeon (KR)**
• **KANG, Byung Chan**
**34124 Daejeon (KR)**
• **JO, Yeong Min**
**34124 Daejeon (KR)**
• **PARK, Joo Ho**
**49398 Busan (KR)**
• **PARK, Dae Yoon**
**31115 Cheonan-si, Chungcheongnam-do (KR)**

(74) Representative: **Stolmár & Partner**
**Patentanwälte PartG mbB**
**Blumenstraße 17**
**80331 München (DE)**

(54) **APPARATUS AND METHOD FOR MANUFACTURING NEGATIVE ELECTRODE**

(57) Apparatuses and methods for manufacturing negative electrodes are disclosed. in an embodiment, an apparatus for manufacturing a negative electrode includes upper and lower magnet plates, each having (N+1) magnet modules with unit magnets arranged and offset in the Y-axis by N×d based on magnetic force direction patterns to control electrode alignment.

EP 4 685 860 A1

FIG. 6

**Description**

**TECHNICAL FIELD**

The disclosed technology generally relates to an apparatus and a method for manufacturing a negative electrode.

**BACKGROUND**

Generally, a negative electrode for a secondary battery may be manufactured by applying a negative electrode mixture slurry including a negative electrode active material, a conductive agent, a binder, and a solvent to a negative electrode current collector, followed by drying and rolling the slurry.

In this manufacturing process, the negative electrode active material having an anisotropic structure may be mainly oriented in a horizontal direction parallel to a negative electrode current collector. As a result, most of the pores formed between the negative electrode active materials may also be oriented in the horizontal direction. Since the negative electrode active material and pores are oriented in the horizontal direction, lithium ions may move through the pores oriented in the horizontal direction while a secondary battery is charged or discharged.

Recently, the demand for high performance, long-lasting secondary batteries has increased, leading to an increase in the loading amount of the negative electrode to increase capacity.

**SUMMARY**

In an aspect of the disclosed technology, a negative electrode may improve battery performance by ensuring sufficient vertical orientation of the negative electrode active material within a relatively short period of time. In addition, the disclosed technology can be implemented in some embodiments to provide an apparatus for manufacturing a negative electrode. This disclosed technology is directed to a fabrication process for applying a negative electrode composite slurry on a negative electrode current collector while moving the negative electrode composite slurry through a permanent magnet assembly to complete the manufacturing of a negative electrode for a battery.

In an aspect of the disclosed technology, a method for manufacturing a negative electrode using an apparatus for manufacturing a negative electrode may be provided.

In an aspect of the disclosed technology, a negative electrode in which orientation of a negative electrode active material with respect to a negative electrode current collector is uniform throughout the negative electrode may be provided.

In an aspect of the disclosed technology, an apparatus for manufacturing a negative electrode includes a pair of magnet plates including an upper magnet plate and a lower magnet plate disposed above and below an X-Y plane along which a negative electrode travels in an X-axis direction, wherein each of the magnet plates includes (N+1) (N is an integer equal or greater than 1) magnet modules including a plurality of first vertical unit magnets having a magnetic force direction directed in a positive Z-axis direction (e.g., a magnetic force line is upward), a plurality of second vertical unit magnets having a magnetic force direction directed in a negative Z-axis direction (e.g., a magnetic force line is downward), a plurality of first horizontal unit magnets having a magnetic force direction directed in a negative Y-axis direction (e.g., a magnetic force line extends to the left), and a plurality of second horizontal unit magnets having magnetic force direction directed in a positive Y-axis direction (e.g., a magnetic force line extends to the right) are arranged in a predetermined pattern in a Y-axis direction, where having magnetic force direction directed in a positive X-axis direction, wherein the first and second vertical unit magnets and first and second horizontal unit magnets are arranged in a predetermined pattern in a Y-axis direction, where N is an integer equal to or greater than 1, wherein the magnet modules are arranged in an X-axis direction parallel to the X-Y plane, wherein, when a Y-coordinate of a first unit magnet of a first magnet module, among the magnet modules, is 0, an absolute value of a Y-coordinate of a first unit magnet of an (N+1)th magnet module is N×d, and wherein the first unit magnet of the (N+1)th magnet module is of an identical type to a first unit magnet of an Nth magnet module, and is offset in the Y-axis direction by a distance (d) smaller than a width of the unit magnet in the Y-axis direction, from a linear line parallel to an X-axis direction passing through an origin point ($O^N$) of the Nth magnet module.

The distance (d) may be (n) times a value defined by any one of equations (1) to (5), where (n) is a positive integer.

$$\frac{\left(\dfrac{LY1}{2} + \dfrac{(LY2 + LY4)}{2} + \dfrac{LY3}{2}\right)}{(N+1)} \quad (1)$$

$$\frac{(\ ^{LY1}/_2\ +\ LY2\ +\ ^{LY3}/_2\ )}{(N+1)}\ (2)$$

$$\frac{(\ ^{LY1}/_2\ +\ LY4\ +\ ^{LY3}/_2\ )}{(N+1)}\ (3)$$

$$\frac{(LY1\ +\ LY2)}{(N+1)}\ (4)$$

$$\frac{(LY1\ +\ LY4)}{(N+1)}\ (5)$$

where LY1 is a length in the Y-axis direction of the first vertical unit magnet, LY3 is a length in the Y-axis direction of the second vertical unit magnet, LY2 is a length in the Y-axis direction of the first horizontal unit magnet, LY4 is a length in the Y-axis direction of the second horizontal unit magnet, and N+1 is a number of magnet modules included in each of the magnet plates.

The magnet module may have a unit magnet arrangement pattern in which a magnetic force direction of the unit magnets may change by 90 degrees in the Y-axis direction.

The (N+1)th magnet module may have the same unit magnet arrangement pattern as the Nth magnet module.

A last magnet module included in each of the magnet plates may be offset in the Y-axis direction by 2(n) unit magnets with respect to the first magnet module , where (n) is a positive integer.

Each magnet module may have horizontal unit magnets disposed on two opposite side ends.

The two horizontal unit magnets disposed on two opposite side ends may be the same or different.

In the upper magnet plate and the lower magnet plate, magnets having opposite polarities may face each other.

A magnetic force of each of the magnet plates varies in the Y-axis direction.

Unit magnets included in a magnet module of each of the magnet plates may have the same length (LX) in the X-axis direction.

For each unit magnet included in each of the magnet plates, directions of the magnetic force direction and a corresponding magnetic force may be the same.

The unit magnets included in each of the magnet plates may have the same magnetic force.

A vertical unit magnet and a horizontal unit magnet included in each of the magnet plates may have the same thickness or different thicknesses.

Each of the magnet plates may include: three or more long magnet modules having a length equal to a Y-axis direction length of each of the magnet plates; and at least one short magnet module having a length shorter than the Y-axis direction length of each of the magnet plates, and two opposite side ends of the long magnet modules may be aligned on a linear line parallel to the X-axis of each of the magnet plates.

The difference between the length of the short magnet module and the length in the Y-axis direction of each of the magnet plates may be less than or equal to the length of one unit magnet.

Two opposite side ends of the short magnet module may be spaced apart from an alignment line of the long magnet module.

Vertical unit magnets may be disposed on two opposite side ends of the at least one short magnet module.

Vertical unit magnets disposed on two opposite side ends may have an identical type or different types.

A portion of a vertical unit magnet may be disposed at two opposite side ends of at least one of the three or more long magnet modules, and a portion of the vertical unit magnet may have a length smaller than a length of the first vertical unit magnet or the second vertical unit magnet.

A portion of each of vertical unit magnets disposed on two opposite side ends may have an identical length or different lengths.

A sum of lengths of portions of the vertical unit magnets disposed on two opposite side ends may be the same as a length of the first vertical unit magnet or the second vertical unit magnet.

In an aspect of the disclosed technology, a method for manufacturing a negative electrode includes an applying process of applying a negative electrode composite including a negative electrode active material to at least one surface of a negative electrode current collector; and a magnetic field applying process of applying a magnetic field to allow the negative electrode current collector to which the negative electrode composite is applied to travel between an upper magnet plate and a lower magnet plate under a magnetic field, wherein the magnetic field is applied by an apparatus for manufacturing a negative electrode based on one of claims 1 to 13.

The method may further include a drying process of drying the negative electrode composite, wherein the drying process may be performed during or after the magnetic field applying process.

The magnetic field may be applied in a perpendicular direction with respect to the negative electrode current collector.

A magnetic force of the magnetic field may change in both the X-axis and Y-axis directions.

A magnetic force of the magnetic field in the magnet module may increase and decrease repeatedly in the Y-axis direction.

A magnetic force of the magnetic field in the magnet module may have a sine wave based on a position in the Y-axis direction.

The magnetic field may be applied for 1 second or more.

The negative electrode composite may have a viscosity of 150,000 cp (measured at 25°C and a shear rate of $0.1s^{-1}$) or less.

## BRIEF DESCRIPTION OF DRAWINGS

Certain aspects, features, and advantages of the disclosed technology are illustrated in the following detailed description with reference to the accompanying drawings.

FIG. 1 is a diagram illustrating a magnet plate having a general arrangement used for applying a magnetic field.

FIG. 2 is a diagram illustrating a magnet plate in which a vertical unit magnet and a horizontal unit magnet are arranged such that a direction of a magnetic force line is rotated by 90 degrees.

FIG. 3A is a diagram illustrating an example of a vertical unit magnet in which a direction of a magnetic force line is directed in a negative Z-axis direction.

FIG. 3B is a diagram illustrating an example of a horizontal unit magnet in which a direction of a magnetic force line is directed in a positive Y-axis direction.

FIG. 4 is a diagram illustrating a change in the direction of a magnetic force and a magnetic force line of a magnetic field applied by a magnet plate having a magnet arrangement as shown in FIG. 2.

FIG. 5A is a diagram illustrating directions of a magnetic force and a magnetic force line when a magnet plate having the magnet arrangement of FIG. 2 is applied to two opposite surfaces of a negative electrode traveling plane.

FIG. 5B is a diagram illustrating directions of a magnetic force and a magnetic force line when a magnet plate having the magnet arrangement of FIG. 2 is applied to two opposite surfaces of a negative electrode traveling plane.

FIG. 6 is a diagram illustrating a magnet plate based on an embodiment of the disclosed technology.

FIG. 7 is a diagram illustrating a magnet plate based on an embodiment of the disclosed technology.

FIG. 8 is a diagram illustrating a magnet plate based on an embodiment of the disclosed technology.

FIG. 9 is a diagram illustrating a magnet plate based on an embodiment of the disclosed technology.

FIG. 10 is a diagram illustrating an intensity of a magnetic force applied based on a position in a width direction of a negative electrode when an apparatus for manufacturing a negative electrode to which one of magnet plates in FIGS. 6 to 9 is applied is used.

FIG. 11 is a diagram illustrating one of magnet plates disposed on both upper and lower surfaces of an X-Y plane along which a negative electrode travels in the X-axis direction, illustrating a magnet plate that forms a magnetic field in which a magnetic force periodically changes in the X-axis direction by arranging a vertical unit magnet and a horizontal unit magnet such that a direction of a magnetic force line changes by 90 degrees in the X-axis direction.

FIG. 12 is a diagram illustrating one of magnet plates disposed on both upper and lower surfaces of the X-Y plane along which a negative electrode travels in the X-axis direction, illustrating a magnet plate that forms a magnetic field in which a magnetic force periodically changes in the X-axis direction by arranging a vertical unit magnet and a horizontal unit magnet such that a direction of a magnetic force line changes by 90 degrees in the Y-axis direction.

FIG. 13 illustrates a preferred orientation (P/O) in which the degree of orientation of a negative electrode active material is measured using XRD at 10 points at 10 mm intervals in a width direction of a negative electrode with respect to each of negative electrodes manufactured in embodiments 1 to 2 and comparative examples 1 to 4.

## DETAILED DESCRIPTION

The embodiments of the disclosed technology are illustrated in embodiments with reference to the accompanying drawings.

As the demand for battery capacity increases, there has been growing need for improved fast-charging performance. However, when pores in the negative electrode in a battery are oriented in the horizontal direction, the path lithium ions must travel becomes longer as the loading amount of the negative electrode increases. This extended travel distance may increase internal resistance during a charging process, which may lead to an increase in charging and discharging time.

In particular, when charging or discharging at a high C-rate for charging or discharging relative to the battery's full charge capacity, the increase internal resistance can result in lithium-plating on the surface of the negative electrode. This phenomenon not only reduces battery capacity over repeated charge and discharge cycles but also creates potential battery safety issues.

Graphite, a commonly used negative electrode active material, may generally have a spherical shape but exhibits anisotropy. When graphite is oriented in a direction perpendicular to a current collector, a rate of lithium ion diffusion into the negative electrode may improve, internal resistance may decrease, and the fast-charging performance may be improved.

To achieve this perpendicular orientation, graphite, which is a diamagnetic material, can be aligned during the manufacturing the negative electrode by applying a magnetic field in a vertical direction to a negative electrode current collector using a permanent magnet immediately before drying the negative electrode slurry coated on the negative electrode current collector. As the strength of the magnetic field increases, the vertical alignment of the negative electrode active material and pores can be effectively achieved within the same magnetic field application duration.

Recently, to improve battery performance by shortening the movement path of lithium ions, a method can be used to apply a magnetic field by a permanent magnet, apply a negative electrode composite slurry on a negative electrode current collector, and move the slurry into the magnetic field, thereby manufacturing a negative electrode.

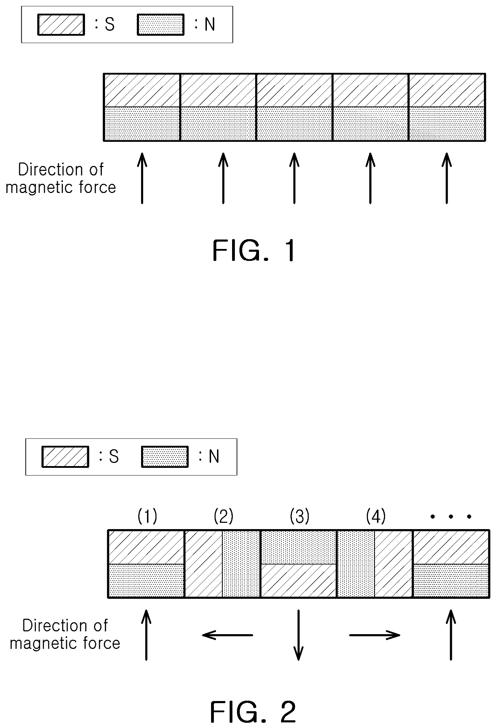

Generally, a permanent magnet may be used to apply a magnetic field, and a magnetic field may be applied using a magnet plate in which individual magnets are arranged in a row. The magnet plate may have, for example, a magnet arrangement illustrated in FIG. 1. Specifically, as illustrated in FIG. 1, the magnet plate may be a magnet plate having a magnet arrangement in which a plurality of unit magnets are arranged in the same shape such that a magnetic force is directed in a predetermined direction. When a magnet plate having a magnet arrangement as illustrated in FIG. 1 is used, a magnetic force of up to about 4,000 G (Gauss) may be provided.

To improve productivity of a negative electrode, processes of coating and drying negative electrode composite slurry on a negative electrode current collector may be performed at a relatively high speed, and accordingly, the time for applying the magnetic field in the process of manufacturing a negative electrode may be limited to within a short time, e.g., several seconds. Accordingly, as the magnetic force of the magnetic field by the magnet plate may be small as illustrated in FIG. 1, it may be difficult to ensure a sufficient degree of orientation of the negative electrode within a relatively short period of time.

In this case, to maximize the magnetic force of the magnetic field, a magnet plate including magnets arranged as illustrated in FIG. 2 may be used.

Specifically, as illustrated in FIG. 2, a magnet plate having an arrangement pattern in which the unit magnets are disposed such that a direction of an N pole and an S pole of each unit magnet, that is, a direction of a magnetic force line, is sequentially changed by 90 degrees in a predetermined direction such as clockwise or counterclockwise direction, may be used by using a neodymium (Nd) permanent magnet including an N pole and an S pole as a unit magnet, and accordingly, the magnetic force on one side may be maximized.

More specifically, as illustrated in FIG. 2, from the left to the right of the diagram, a first vertical unit magnet 1 of which a direction of a magnetic force line is upward, a first horizontal unit magnet 2 of which a direction of a magnetic force line is leftward, a second vertical unit magnet 3 of which a direction of a magnetic force line is downward, and a second horizontal unit magnet 4 of which a direction of a magnetic force line is rightward may be sequentially disposed such that a magnet plate in which the direction of the magnetic force line changes by 90 degrees in the counterclockwise direction may be configured.

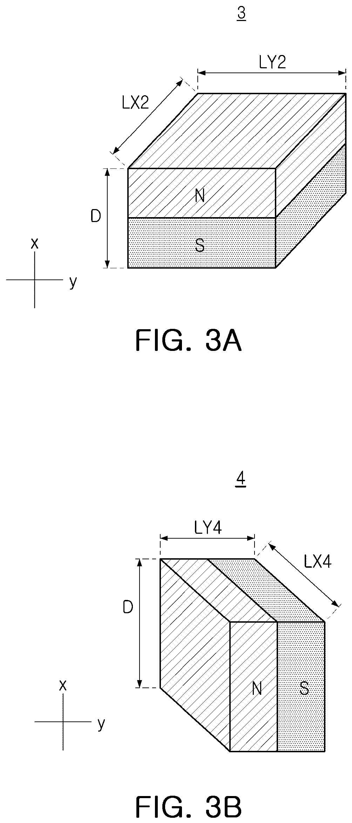

Examples of the second vertical unit magnet 3 and the second horizontal unit magnet 4 is illustrated in FIG. 3. The first vertical unit magnet 1 and the first horizontal unit magnet 2 may be easily understood from FIG. 3. In this case, as illustrated in FIG. 3, when a traveling direction of the negative electrode is the X-axis direction, a length of the unit magnet in the X-axis direction may be defined as LX, a length in the Y-axis direction may be defined as LY, and the thickness may be defined as D.

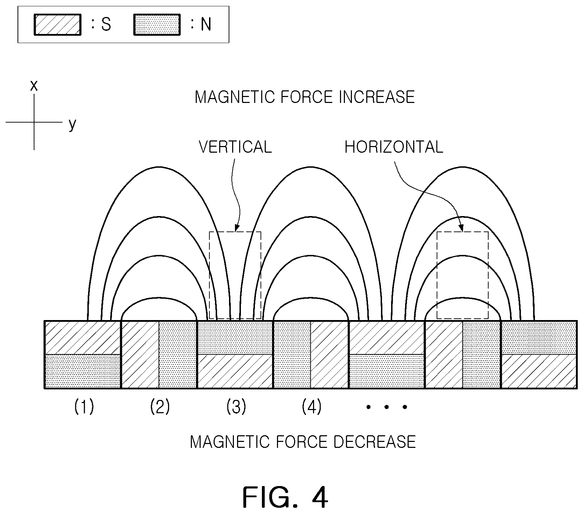

The direction of the magnetic force line exhibited in the magnet plate of the arrangement illustrated in FIG. 2 may be formed in the vertical direction and the horizontal direction, and accordingly, a magnetic field having the directions of a magnetic force and a magnetic force line illustrated in FIG. 4 may be formed. As illustrated in FIG. 2, the magnetic force can be increased by using magnet plates in which the vertical unit magnets and the horizontal unit magnets are arranged such that the direction of the magnetic force lines is rotated by 90 degrees.

For example, by a magnet plate in which the direction of the magnetic force as in FIG. 2 rotates by 90 degrees, a magnitude of the magnetic force may change periodically as illustrated in FIG. 4, but a larger magnetic force of up to 8,000 G may be generated. Accordingly, when the negative electrode is traveled within the magnetic field region by the magnet plate having the magnet arrangement as illustrated in FIG. 2, a negative electrode active material within the negative electrode composite layer may be oriented.

When the magnet plate having the magnet arrangement illustrated in FIG. 2 is used, positions of the N pole and the S pole of the unit magnets included in the magnet plate may change, and accordingly, the direction of the magnetic force line may also change vertically and horizontally, such that the magnetic force line in the horizontal direction may be present as illustrated in FIG. 4. When the negative electrode is traveled within the magnetic field region having the magnetic force line in the horizontal direction, the magnetic force line in the horizontal direction may have a detrimental effect on the orientation of the negative electrode active material, and accordingly, there may be a predetermined limitation in increasing orientation of the negative electrode.

When orienting the negative electrode active material using a magnet plate having the arrangement of a magnetic field as in FIG. 2, the negative electrode may have an orientation characteristic of changing periodically at least partially in the width direction of the negative electrode, that is, the Y-axis direction, when the traveling direction is parallel to the X-axis, and may have a relatively uniform orientation in the X-axis direction, which is the traveling direction.

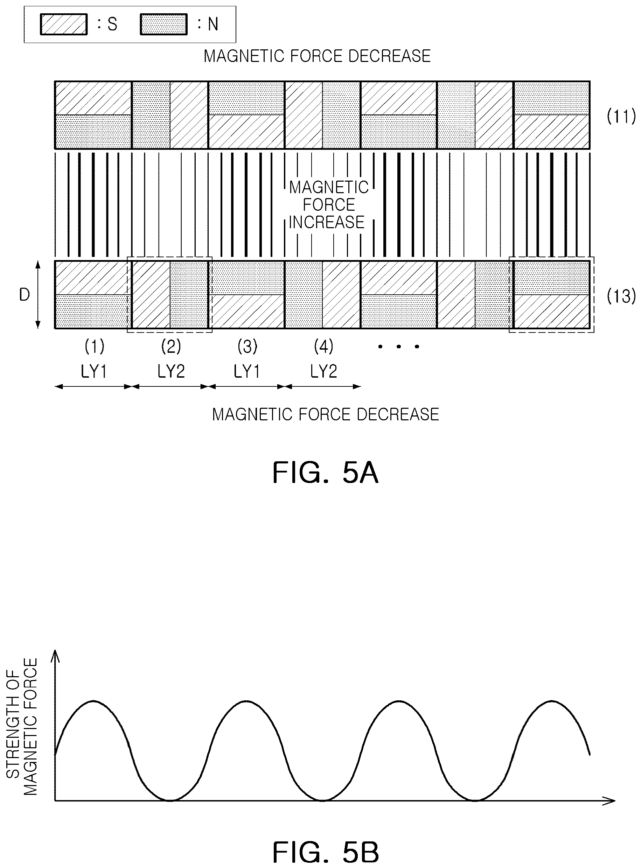

When disposing the magnet plate having the magnet arrangement illustrated in FIG. 2 on above and below a movement path along which the negative electrode travels, the magnetic force line in the horizontal direction as above may be eliminated, and accordingly, only the magnetic force line in the vertical direction may be present in the magnetic field, such that the orientation of the negative electrode active material may be further improved, which is illustrated in FIG. 5A.

As illustrated in FIG. 5A, a pair of magnet plates 11 and 13 arranged such that the direction of the magnetic force lines of the first vertical unit magnet 1, the second vertical unit magnet 3, the first horizontal unit magnet 2, and the second horizontal unit magnet 4 are changed by 90 degrees may be disposed above and below the traveling path of the negative electrode. In this case, the magnet plates 11 and 13 on the upper and lower sides may be disposed such that the magnets of opposite polarities may oppose each other.

For example, as illustrated in FIG. 5A, when the first vertical unit magnet 1 having the S pole of the lower magnet plate 13 is disposed toward a negative electrode traveling surface, the second vertical unit magnet 3 having the N pole of the upper magnet plate 11 may be disposed toward the negative electrode traveling surface.

By disposing a pair of the magnet plates 11 and 13 illustrated in FIG. 5A on the upper and lower sides of the negative electrode traveling surface, the magnetic force may decrease on the outside of the traveling surface, that is, the lower surface of the lower magnet plate 13 and the upper surface of the upper magnet plate 11, and the magnetic force may increases on the traveling surface, that is, between the upper and lower magnet plates 11 and 13, along which the negative electrode travels, thereby improving the orientation of the negative electrode.

Also, as illustrated in FIGS. 5A and 5B, the magnetic force in the Y-axis direction may be changed periodically as the magnetic force repeatedly increases and decreases. Specifically, the magnitude of the magnetic force between the upper and lower magnet plates 11 and 13 in FIG. 5A is illustrated by the thickness of the solid line, and the magnetic force increases and decreases repeatedly. A change in the magnetic force based on the arrangement position of the magnet plates is illustrated in FIG. 5B.

As indicated in FIGS. 5A and 5B, the magnetic force may increase and decrease periodically in the width direction of the magnet plate, but the magnetic force line in the horizontal direction may be removed between the upper and lower magnet plates 11 and 13, such that a magnetic force line in the vertical direction may act. Accordingly, in an embodiment, the applied magnetic field may be applied in the vertical direction with respect to the negative electrode current collector.

In an embodiment, as described above, by disposing a pair of magnet plates in which a vertical unit magnet and a horizontal unit magnet are used on both upper and lower sides of a negative electrode traveling surface and the unit magnets are arranged such that the direction of the magnetic force line rotates 90 degrees, and allowing the negative electrode to travel while applying a magnetic field, a negative electrode in which the negative electrode active material in the negative electrode composite layer is oriented in the vertical direction with respect to the negative electrode current collector may be manufactured.

More specifically, in an embodiment, when the traveling direction of the negative electrode is referred to as the X-axis direction and the plane along which the negative electrode travels is referred to as the X-Y plane, an apparatus for manufacturing a negative electrode in which a pair of magnet plates including an upper magnet plate and a lower magnet plate in which vertical unit magnets and horizontal unit magnets are arranged in the Y-axis direction above and below the X-Y plane may be provided.

In this case, the upper and lower magnet plates may include a vertical unit magnet and a horizontal unit magnet. Specifically, the vertical unit magnet may include a first vertical unit magnet having a magnetic force direction directed in a positive Z-axis direction, and a second vertical unit magnet having a magnetic force direction directed in a negative Z-axis direction, and the horizontal unit magnet may include a first horizontal unit magnet having a magnetic force direction directed in a negative Y-axis direction, and a second horizontal unit magnet having magnetic force direction directed in a positive Y-axis direction.

Although not limited to any particular example, in the unit magnets included in the magnet plate, the directions of a magnetic force line and a magnetic force may be the same or different. Further, the unit magnets included in the magnet plate may have the same magnetic force even when the unit magnets are not the same type.

More specifically, the magnet plate may include a magnet module disposed in a predetermined pattern toward the Y-axis direction using a plurality of the two types of vertical unit magnets and a plurality of the two types of horizontal unit magnets.

The magnet module may be formed using a plurality of unit magnets, and specifically, as illustrated in FIG. 5A, the magnet module may have a unit magnet arrangement pattern in which the unit magnets are disposed such that the direction of the magnetic force line is changed by 90 degrees in the Y-axis direction. That is, the magnet module may have substantially the same cross-sectional shape as that of the magnet plate described above. In this case, FIG. 5 only illustrates a portion of the arrangement of the unit magnets in a magnet module, and the arrangement of the unit magnets of (1) to (4) may be repeated.

Specifically, the magnet plate may be manufactured by arranging the plurality of magnet modules in the X-axis direction, and the magnet plate by the arrangement of the magnet modules may have a plane with respect to the negative electrode traveling surface.

The number of magnet modules used for manufacturing the magnet plate may not limited to any particular example. In various implementations, the number of magnet modules may be two or more such as N+1, where N may be a natural number or integer that is equal or greater than 1.

The magnet module may be formed using a plurality of unit magnets in the Y-axis direction, and a magnet plate may be manufactured using a plurality of such magnet modules. In this case, the magnet modules included in the magnet plate may have the same shape. That is, the unit magnets may be disposed in the same pattern, and an (N+1)th magnet module may have the same unit magnet arrangement pattern as that of an Nth magnet module.

In the magnet module, may be arranged linearly in the X-axis direction, but in an embodiment, as the magnet module moves in the X-axis direction, the magnet module may position-move in a predetermined direction of the Y-axis by a predetermined distance d.

That is, the first unit magnet included in the (N+1)th magnet module may be of the same type as the first unit magnet included in the Nth magnet module, and may position-move in the Y-axis direction a distance d smaller than a width of the unit magnet from a linear line parallel to the X-axis passing through the origin point ($O^N$) of the Nth magnet module.

The distance d is not limited to any particular example, and may be smaller than the width of the unit magnet used in an embodiment, specifically, the length in the Y-axis direction of the magnet plate. In this case, the width of the unit magnet may be the smallest width when the widths of the unit magnets used to configure the magnet module are different from each other. More specifically, the distance d may be 3/4 or less, 2/3 or less, 1/2 or less, 1/3 or less, or 1/4 or less of the width of the unit magnet.

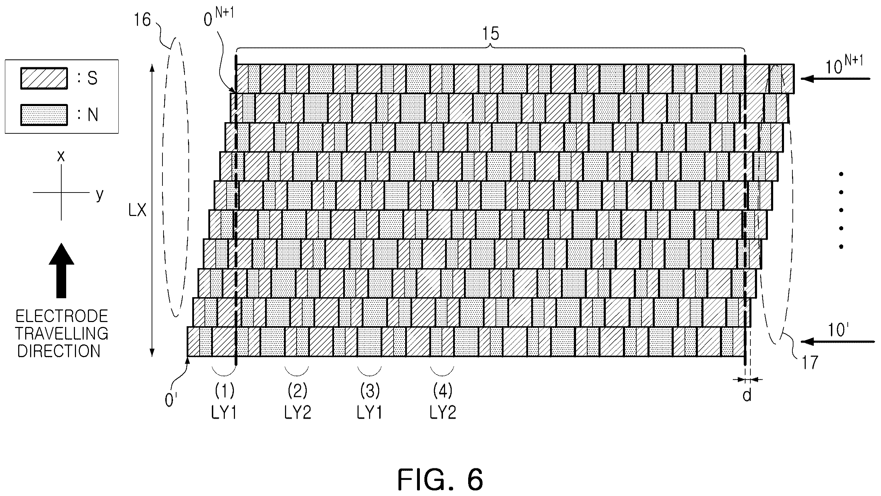

The above example is illustrated in FIG. 6. FIG. 6 is a diagram illustrating an example of a magnetic plate based on an embodiment. As illustrated in FIG. 6, when the lower left position of the first unit magnet positioned first on the left side of the first magnet module ($10^1$) is referred to as an origin point ($O^1$), an origin point ($O^2$) of the second magnet module ($10^2$) positioned second may be positioned on a parallel linear line position-moved in the Y-axis direction by a distance d with respect to the X-axis passing through the origin point ($O^1$). Also, an origin point ($O^3$) of the third magnet module ($10^3$) positioned third may be positioned on a parallel linear line position-moved in the Y-axis direction by the same distance d with respect to the linear line parallel to the X-axis passing through the origin point ($O^2$) of the second magnet module. Represented in coordinate terms, when the Y-coordinate of the first unit magnet of the first magnet module ($10^1$) is 0, the Y-coordinate of the first unit magnet of the second magnet module may be d, the Y-coordinate of the first unit magnet of the third magnet module may be $2 \times d$, and the Y-coordinate of the first unit magnet of the (N+1)th magnet module may be $N \times d$.

When using each magnet module, as illustrated in FIG. 6, each magnet module may be disposed based on the determined origin point by position-moving a predetermined distance d in the Y-axis direction as described above. By a magnet plate position-moved with respect to an adjacent magnet module for a magnet module, the change in the degree of orientation of the negative electrode active material due to the change in the magnetic force appearing in one magnet module may be offset, and accordingly, a negative electrode having a uniform degree of orientation throughout the negative electrode may be obtained. Also, using the magnet plate as described above, the amount of magnetic force applied to a specific position in the width direction of the negative electrode may overlap each other, and accordingly, intensity of the overall magnetic force may be increased, such that the degree of orientation of the negative electrode may be further increased.

In the diagram, the direction of the position-moving may be in the positive direction of the Y-axis with respect to the X-axis, but it may be easily understood that the position-moving may be in the negative direction of the Y-axis.

In the magnet module, the degree of orientation of the negative electrode may be more affected by the unit magnet providing a high magnetic force. In other words, it is indicated that the influence of the vertical unit magnets may be large. Accordingly, the distance d may be determined from the distance between the position in which the magnetic force peak is observed and the subsequent magnetic force peak (the distance between the maximum magnetic force positions) when the magnetic force changes periodically in a magnet module. That is, the distance d may be determined from the amplitude of one magnetic force change cycle, and may be determined from the distance between centers of two vertical magnets in the horizontal direction of the magnet module.

When the length in the Y-axis direction of the first vertical unit magnet 1 is defined as LY1, the length in the Y-axis direction of the second vertical unit magnet 3 is defined as LY3, the length in the Y-axis direction of the first horizontal unit magnet 2 is defined as LY2, and the length in the Y-axis direction of the second horizontal unit magnet 4 is defined as LY4, the distance d may be determined from equation [LY1/2 + (LY2+LY4)/2 + LY3/2]. For example, the distance d may be an integer (n) times the value obtained by dividing by the number of magnet modules N+1 in the equation. In this case, the integer n is not limited to any particular example, and may be 1, 2, 3, or 4, or more.

When the distance d is represented as an equation, it may be represented by (n) times a value defined by any one of equations (1) to (5), where (n) is a positive integer..

$$\frac{(LY1/2 \; + \; (LY2+LY4)/2 \; + \; LY3/2)}{(N+1)} \quad (1)$$

$$\frac{(LY1/2 \; + \; LY2 + \; LY3/2)}{(N+1)} \quad (2)$$

$$\frac{(LY1/2 \; + \; LY4 + \; LY3/2)}{(N+1)} \quad (3)$$

$$\frac{(LY1 \; + \; LY2)}{(N+1)} \quad (4)$$

$$\frac{(LY1 \; + \; LY4)}{(N+1)} \quad (5)$$

Specifically, equation (1) may be based on the distance between the maximum magnetic force positions as described above, and equation (1) indicates the case in which the lengths in the Y-axis direction between the first and second vertical unit magnets 1 and 3 are different, and the lengths in the Y-axis direction of the first and second horizontal unit magnets 2 and 4 are different, equation (2) and equation (3) indicate the case in which the lengths in the Y-axis direction between the first and second vertical unit magnets 1 and 3 are different, and the lengths in the Y-axis direction of the first and second horizontal unit magnets 2 and 4 are the same, and equation (4) and equation (5) indicate the case in which the lengths in the Y-axis direction between the first and second vertical unit magnets 1 and 3 are the same, and the lengths in the Y-axis direction of the first and second horizontal unit magnets 2 and 4 are the same.

When the value of the distance d is the same as one of the equations above (that is, 1 time), the first unit magnet of the last magnet module (N+1)th magnet module) may be disposed by position-moving parallel to the X-axis in the Y-axis direction by distances of an even number of unit magnets relative to the first unit magnet of the first magnet module. When the value of the distance d is an integer n times the value of one of the equations above, the first unit magnet of the (N+1)th magnet module, which is the last magnet module, may be disposed by position-moving parallel to the X-axis in the Y-axis direction by distances of an 2n number of unit magnet relative to the first unit magnet of the first magnet module.

FIG. 6 illustrates an example of a magnet plate including ten magnet modules, in which two unit magnets are position-moved in the Y-axis direction between the Y coordinate at which the first unit magnet of the first magnet module ($10^1$), first positioned, and the Y coordinate at which the first unit magnet of the last tenth magnet module ($10^{10}$) is positioned. Accordingly, the distance d may be one time the value obtained from one of the equations (1) to (5) above.

In the magnet plate in an embodiment, as illustrated in FIG. 6, unit magnets of each magnet module may be sequentially arranged in a predetermined pattern only in one direction of the first unit magnet (the first direction, the positive direction of Y-axis in FIG. 6), and in this case, unit magnets may not be arranged in a direction opposite to the first direction (the second direction, the negative direction of Y-axis in FIG. 6).

When a negative electrode is to be oriented using a magnet plate having an arrangement form of magnet modules as described above, although not limited thereto, as illustrated in FIG. 6, the negative electrode to be oriented may travel in the region between the first unit magnet of the tenth magnet module ($10^{N+1}=10^{10}$) and the last unit magnet of the first magnet module ($10^1$), and the region may be referred to as a traveling region 15.

In the magnet x plate, although not limited thereto, in an embodiment, as illustrated in FIG. 6, horizontal unit magnets may be disposed on both side ends of each magnet module included in the magnetic plate. As illustrated in FIGS.

4 and 5, the magnetic force of the horizontal unit magnet disposed on both side ends of the vertical unit magnet may be added to the vertical unit magnet, thereby providing an effect of exhibiting the maximum magnetic force in the vertical unit magnet. Accordingly, since the horizontal unit magnet is disposed on both sides of the magnet module, the magnetic force of the vertical unit magnet positioned adjacently may be maximized, and the deviation of the magnetic force based on the position of the magnet module may be minimized.

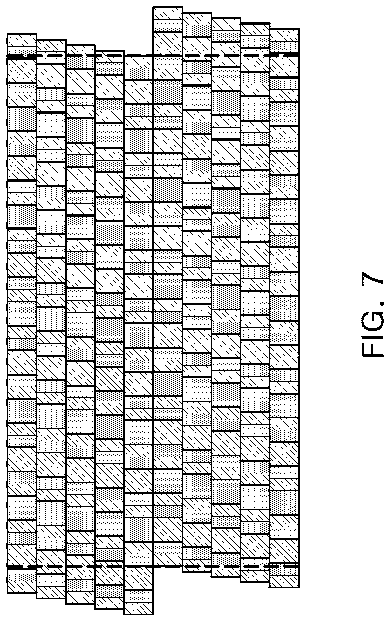

As another embodiment, the magnetic plate may have the pattern illustrated in FIG. 7. That is, the magnetic plate in FIG. 6 may be modified into the magnetic plate illustrated in FIG. 7.

The magnetic plate illustrated in FIG. 7 may be a magnet plate in which the arrangement order of the magnet modules included in the magnetic plate illustrated in FIG. 6 is changed. Specifically, the magnet plate in FIG. 7 may be a magnet plate configured by changing the positions of the first to fifth magnet modules and the sixth to tenth magnet modules of the magnet plate in FIG. 6, and may be a magnet plate configured using the sixth to tenth magnet modules of the magnet plate in FIG. 6 as the first to fifth magnet module of the magnet plate in FIG. 7, and using the first to fifth magnet module in FIG. 6 as the sixth to tenth magnet module of the magnet plate in FIG. 7.

The modification of the magnet plate is not limited to the example illustrated in FIG. 7, and may be varied.

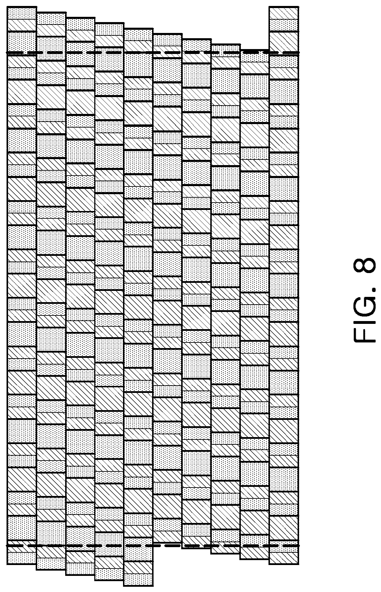

As another embodiment, the magnetic plate may have the pattern illustrated in FIG. 8. That is, the magnetic plate in FIG. 6 may be modified to the magnetic plate illustrated in FIG. 8.

The magnet plate illustrated in FIG. 8 may be a magnet plate formed by adding or removing a portion of a unit magnet based on a traveling region of a negative electrode while changing the arrangement of magnet modules included in the magnet plate in FIG. 6. Specifically, the magnet plate in FIG. 8 may be a magnet plate formed by changing the positions of the first to fifth magnet modules and the sixth to tenth magnet modules of the magnet plate in FIG. 6, using the sixth to tenth magnet modules of the magnet plate in FIG. 6 as the first to fifth magnet modules of the magnet plate in FIG. 8, and using the first to fifth magnet modules in FIG. 6 as the sixth to tenth magnet modules of the magnet plate in FIG. 8, and removing the unit magnet disposed on one end of the second to fifth magnet module, specifically, the first vertical unit magnet and the second vertical unit magnet.

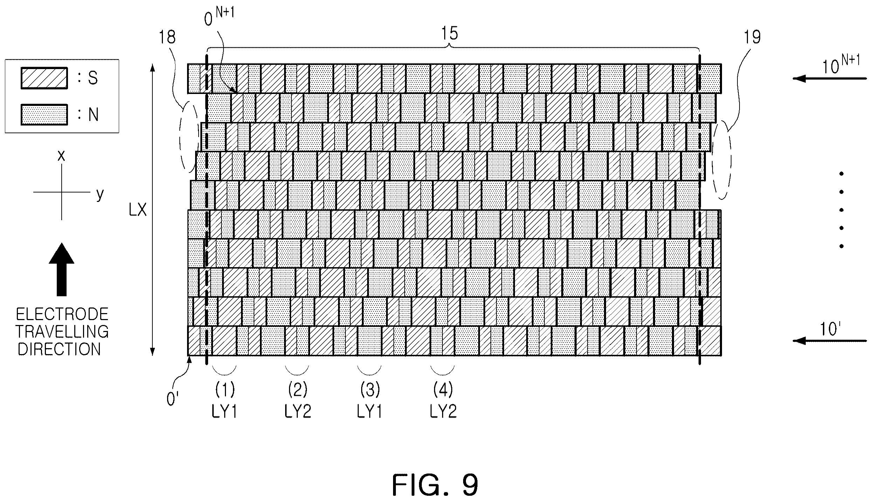

FIG. 8 illustrates an example of removing a unit magnet on one end of a magnet module, and modification may be made by adding a unit magnet, or by adding or removing a unit magnet on the other end or two opposite both side ends, or by adding a unit magnet at a portion of a magnet module and removing a unit magnet at another portion of a magnet module. In this case, the two horizontal unit magnets disposed on the two opposite side ends may be the same or different. In another embodiment, the magnet plate in an embodiment may be a magnet plate having the same magnet module pattern and the distance d as in FIG. 6, and may be a magnet plate having a quadrangular shape as illustrated in FIG. 9.

For example, the magnet plate may be a magnet plate having a quadrangular shape having a length from the origin point of the first magnet module used in the magnet plate in FIG. 9 to the end (end point) of the last unit magnet of the first magnet module. In this case, in FIG. 6, the second to (N+1)th magnet modules may have a space 16 without a magnet on the left side, and a spare magnet 17 may be present on the right side. Accordingly, the magnet plate having quadrangular shape illustrated in FIG. 9 may be formed by, for example, disposing the spare magnets present on the right side of the traveling region in the magnet plate in FIG. 6 in the space region on the left side and changing the patterns of each magnet module to match.

Specifically, the magnet plate of each magnet module other than the first magnet module may be a magnet plate in which magnets are arranged in the first direction as well as the second direction of the first unit magnet. That is, as illustrated in FIG. 9, the magnet plate may have a quadrangular shape. In the case of a magnet plate having a quadrangular shape as above, the space required to install a facility for applying a magnetic field may be saved, and the need to strictly control the precision of the travel when traveling the negative electrode on the magnet plate may be reduced.

The magnets arranged in the second direction may be disposed using magnets which may maintain the magnet arrangement pattern applied to each magnet module. Accordingly, the magnets disposed in the second direction may be the first and second vertical unit magnets and the first and second horizontal unit magnets used in an embodiment. in the second direction, a unit magnet which may maintain the magnet arrangement pattern may be used, and a unit magnet having a length equal to the spacing distance from the X-axis passing through the origin point of the first magnet module may be disposed.

In this case, the "first unit magnet" in the N+1th magnet module may not simply indicate one unit magnet positioned on two opposite side ends in the (N+1)th magnet module, but may indicate a unit magnet which is of the same type as the first unit magnet of the Nth magnet module and is disposed by position-moving a distance d from a linear line parallel to the X-axis passing through the origin point ($O^N$) of the Nth magnet module. For example, in FIG. 9, the first unit magnet of the second magnet module may be the first horizontal unit magnet 2 of the same type as that of the first unit magnet of the first magnet module, and may be position-moved in the positive direction of the Y-axis by a distance d from the origin point ($O^1$) of the first magnet module.

As illustrated in FIG. 9, the magnet plate may include three or more long magnet modules having the same length as the length in the Y-axis direction of the magnet plate, and two opposite side ends of the long magnet modules may be aligned in a linear line parallel to the X-axis of the magnet plate.

The magnet plate may include at least one long magnet module having a portion of a vertical unit magnet disposed on two opposite side ends. As described above, in the magnet plate as illustrated in FIG. 6, the spare magnets may be disposed in a space such that the magnets are aligned on a linear line parallel to the X-axis, such that a portion of a vertical unit magnet having a unit magnet cut on two opposite side ends of the long magnet module may be included.

A portion of the vertical unit magnet may be a portion of the first vertical unit magnet or a portion of the second vertical unit magnet, and portions of the vertical unit magnets disposed on the two opposite side ends may be the same or different.

A portion of each of the vertical unit magnets disposed on two opposite side ends may have a length smaller than that of the first or second vertical unit magnets. For example, a portion of the vertical unit magnet disposed on the two opposite side ends of the magnet module may have a length difference of an integer of 1 or more of the length d.

Also, the lengths of portions of the vertical unit magnet disposed on the two opposite side ends may be the same or different. For example, in one magnet module, portions of the two vertical unit magnets disposed on the two opposite side ends may have a length difference of an integer of the length d, and when the lengths of the two vertical unit magnet portions are the same, the length difference may be 0, and when one of the two vertical unit magnet portions is longer, the length difference may be d, 2d, 3d, or the like.

Although not limited thereto, the sum of the lengths of portions of vertical unit magnets disposed on the two opposite side ends may be the same as the length of the first vertical unit magnet or the second vertical unit magnet.

As illustrated in FIG. 7, in the first and tenth magnet modules included in the magnet plate, unit magnets positioned on two opposite side ends of the magnet module may be a first horizontal unit magnet 2 and a first vertical unit magnet 1, respectively, and may have the same size as that of the unit magnets of the same type positioned in the same module.

As illustrated in FIG. 8, as the second to fifth magnet modules are position-moved by a distance d, a portion of the first vertical unit magnet and a portion of the second vertical unit magnet may be positioned on two opposite side ends of each magnet module, respectively. In this case, when the two portions of each of the first vertical unit magnets positioned on two opposite side ends of one magnet module are combined, the size thereof may be the same size as one complete vertical unit magnet. In other words, the partial unit magnets positioned on two opposite side ends may have the same size as one unit magnet separated.

The vertical unit magnets positioned on the two opposite side ends may be the same or different. Specifically, as illustrated in FIG. 8, a portion of the first vertical unit magnet may be positioned on a first side end, and a portion of the second vertical unit magnet may be positioned on a second side end. Also, although not illustrated, the same type of vertical unit magnets may be positioned on the first side end and the second side end, respectively.

The magnet plate may include at least one magnet module in which at least one of the first horizontal unit magnet or the second horizontal unit magnet is omitted as compared to the first magnet module. Accordingly, at least one of the magnet modules included in the magnet plate may have a length smaller than the length in the Y-axis direction of the magnet plate. For example, the magnet plate may include at least one short magnet module having a length shorter than the length in the Y-axis direction of the magnet plate. Two opposite side ends of the short magnet module may be spaced apart from the X-axis of the magnet plate, that is, a linear line along which the long magnet modules are aligned.

The number of the omitted unit magnet may be one. The omitted unit magnet may be a horizontal unit magnet, specifically, the first horizontal unit magnet or the second horizontal unit magnet. Accordingly, in the short magnet module having the omitted unit magnet, vertical unit magnets may be disposed on two opposite side ends, and the vertical unit magnets disposed on two opposite side ends may be homogeneous or heterogeneous.

The length in the Y-axis direction of the magnet plate, specifically, the difference in length of the short magnet module with respect to the length of the long magnet module, may be smaller than the length of the unit magnet. The length in the Y-axis direction of the magnet plate may be the length of the long magnet module.

In this case, two opposite side ends of the short magnet module may be spaced apart from the linear line along which the long magnet module is aligned, and the spacing distance from the linear line along which the long magnet modules are aligned on two opposite side ends of the short magnet module may be an integer of the distance d, and the spacing distance may be the same or different on two opposite side ends. Further, the sum of the two spacing distances on two opposite side ends may be equal to the length of one unit magnet.

As illustrated in FIG. 9, the sixth to ninth magnet modules, differently from the second to fifth magnet modules, may not include partial unit magnets on two opposite side ends thereof. In FIG. 9, in the sixth to ninth magnet modules may be the order in which a portion of the second horizontal unit magnet is positioned on two opposite side ends based on the pattern of the magnet module based on the position-move of the module, but when a portion of the horizontal unit magnet is disposed, the horizontal unit magnet of the portion may not be a portion of the horizontal unit magnet used in the magnet module, but may be an independent unit magnet of a different size. Accordingly, the magnet module may not have a consistent pattern. When a portion of the horizontal unit magnet is positioned on two opposite side ends of the magnet module, the corresponding horizontal unit magnet may not be provided.

Accordingly, the magnet plate based on an embodiment may have spaces 18 and 19 without magnets as illustrated in FIG. 9. The space 18 and 19 may be positioned in a portion of two opposite side ends of the Y-axis direction of the magnet plate, and may be positioned on two opposite ends of one magnet module.

The space 18 and 19 positioned on one end of the magnet module may have a length smaller than the length in the Y-axis direction of one unit magnet, and the sum of the lengths of the space 18 and 19 positioned on the side ends may be equal to one length of the unit magnet. In this case, the unit magnet may represent a magnet module to be positioned on the side end based on the pattern of the magnet module.

In the case in which a negative electrode is to be oriented using a magnet plate having an arrangement form of magnet modules illustrated in FIG. 9, although not limited thereto, the negative electrode to be oriented may travel a region between the innermost side of the space 18 positioned on a first side end of the magnet plate and the innermost side of the space 19 positioned on a second side end of the first side of the magnet plate, as a traveling region.

In an embodiment, the magnet plate may be disposed above and below the negative electrode traveling surface as illustrated in FIG. 5, and the upper magnet plate and the lower magnet plate may be disposed such that magnets of opposite polarities may face each other. As a pair of magnet plates as described above are disposed above and below the negative electrode traveling surface, the magnetic force may be constant in the X-axis direction in which the negative electrode travels, and the magnetic force may be changed in the Y-axis direction.

An apparatus for manufacturing a negative electrode based on an embodiment may include a magnet plate having an arrangement of unit magnets and magnet modules as illustrated in FIG. 6. FIG. 6 illustrates an example of a magnet plate based on an embodiment, which may be an upper magnet plate or a lower magnet plate.

The magnet plate illustrated in FIG. 6 may be applied with a magnetic field in which a magnetic force changes in the X-axis direction, which is a traveling direction of the negative electrode. A plurality of magnet modules disposed in the X-axis direction may have the same unit magnet arrangement pattern, but may be disposed by being position-moved by a predetermined distance relative to adjacent magnet modules, and a magnetic force may be continuously and periodically changed in a specific position while the negative electrode moves along the X-axis.

Also, the magnet plate may be applied with a magnetic field of which strength of the magnetic force changes in the Y-axis direction. Based on an embodiment, the magnet plate may be arranged such that the direction of the magnetic force line in the Y-axis direction changes by 90 degrees, and accordingly, the magnetic force may increase and decrease repeatedly in the Y-axis direction. The increase and decrease of the magnetic force may have a predetermined periodicity, and for example, the magnetic force based on the position in the Y-axis direction may form a sine wave. In this case, the periodicity of the magnetic force may change based on the length (LY) of the unit magnets in the Y-axis direction.

In this case, the magnet plate may be disposed on both the upper and lower sides, and the unit magnets may be arranged such that the magnets having opposite polarities may face each other, and thus, the direction of the magnetic force line in the X-axis and Y-axis directions may not change.

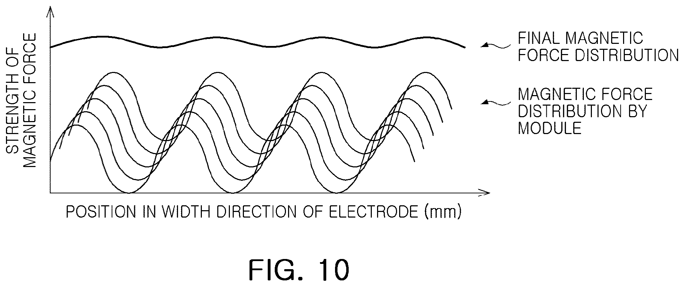

The strength of the magnetic force applied based on the position in the width direction of the negative electrode when the apparatus for manufacturing a negative electrode in an embodiment is applied is illustrated in FIG. 10. As illustrated in FIG. 10, the magnetic force in a specific position in the width direction of the negative electrode may not be constant based on the traveling of the negative electrode, and a different magnetic force may be provided based on the magnet module, such that a uniform degree of orientation may be provided in the width direction of the negative electrode. Also, since different magnetic forces are provided in a specific position in the width direction, a high magnetic force may be uniformly provided to the negative electrode, thereby further improving the degree of orientation of the negative electrode.

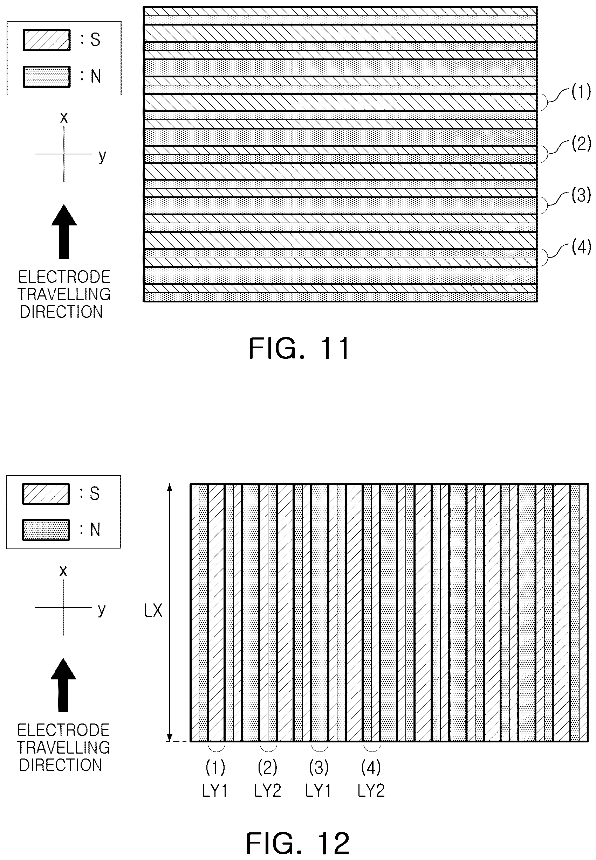

FIG. 11 illustrates an example of an apparatus for manufacturing a negative electrode included in a magnet plate in which the direction of the magnetic force line changes by 90 degrees in the X-axis direction, which is the traveling direction of the negative electrode, a magnet plate in which vertical and horizontal unit magnets in which there is no change in the directions of a magnetic force and a magnetic force line of the magnetic field in the Y-axis direction are arranged is disposed on one of the upper or lower side of the negative electrode traveling surface, and magnets may be disposed on another side surface, such that the magnets of the magnet plate and the magnets of the opposite polarity may face each other.

As illustrated in FIG. 11, when a magnetic field in which the magnetic force of the magnetic field periodically changes in the X-axis direction, which is the traveling direction of the negative electrode, is applied, the negative electrode active material may be oriented in the perpendicular direction with respect to the negative electrode current collector, thereby maximizing the degree of orientation. However, the negative electrode composite layer may be peeled off from the negative electrode current collector during a process of high-rate charging a cell.

Also, FIG. 12 may be an example illustrating an apparatus for manufacturing a negative electrode in which a uniform magnetic field without changes in magnetic force and magnetic force lines is applied in the X-axis direction, which is the traveling direction of the negative electrode, and a magnet plate in which vertical and horizontal unit magnets are arranged such that the directions of a magnetic force and a magnetic force line of the magnetic field change by 90 degrees is disposed on one of the upper or lower side of the negative electrode traveling surface in the Y-axis direction, and magnets may be disposed on another side surface, such that the magnets of the magnet plate and the magnets of the opposite polarity may face each other.

When the magnet plate illustrated in FIG. 12 is applied, a constant magnetic force may be provided in the traveling direction of the negative electrode, and depending on the position, a high magnetic force may be continuously provided such that a high orientation may be ensured, but a magnetic field of low magnetic force may be continuously provided in the width direction of the negative electrode, such that the orientation of the negative electrode may deteriorate, and a negative electrode having an uneven orientation in the width direction of the negative electrode may be obtained, which may be problematic.

However, as described above, when manufacturing a negative electrode by the apparatus for manufacturing a negative electrode having a magnet plate based on an embodiment, a negative electrode having a uniform orientation in the width direction of the negative electrode and a high orientation may be obtained.

In an embodiment, the magnet modules may have a predetermined spacing therebetween. In the magnet plates based on an embodiment, an example in which the magnet modules do not have a spacing therebetween is illustrated in FIGS. 6 to 9, but an example embodiment thereof is not limited thereto, and a predetermined spacing may be provided. In the case in which a predetermined spacing is provided between the magnet modules, the spacing is not limited to any particular example.

In an embodiment, as for unit magnets used to configure the magnet modules, the length (LY) in the Y-axis direction, the length (LX) in the X-axis direction, and the thickness of the same type of unit magnets within one magnet module may be the same or different, and LY, LX, and D of vertical unit magnets may be the same, and LY, LX, and D of horizontal unit magnets may be the same. Also, LY, LX, and D of different type of unit magnets may be the same or different.

Further, LY, LX and D of the same type of unit magnets in different magnet modules may be the same or different, and in particular, LX may be different and LY and D may be the same. In other words, the lengths in the X-axis direction of the magnet modules may be different.

The thickness of the vertical unit magnet and the thickness of the horizontal unit magnet may be the same or different, and the thicknesses are not limited to any particular example, and the plane of the upper magnet plate and the lower magnet plate, facing the X-Y plane through which the negative electrode travels, may be a parallel plane.

As described above, by allowing a negative electrode current collector coated with a negative electrode composite to travel in the apparatus for manufacturing a negative electrode including a pair of magnet plates each having an arrangement of unit magnets based on an embodiment on two opposite surfaces of the X-Y plane through which the negative electrode travels, the negative electrode active material in the negative electrode composite layer may be oriented, and accordingly, the movement path of lithium ions may be shortened.

The negative electrode may be manufactured by applying a negative electrode composite including a negative electrode active material to one or two opposite surfaces of a negative electrode current collector, and allowing the negative electrode current collector to which the negative electrode composite is applied to travel between a pair of magnet plates as described above while a magnetic field is applied.

Generally, a negative electrode in which a negative electrode composite layer is formed on a negative electrode current collector may be manufactured by applying a slurry-type negative electrode composite including a negative electrode active material to at least one surface of the negative electrode current collector, and drying and rolling the composite.

In this case, as described above, the negative electrode composite in a slurry state may be applied on the negative electrode current collector while a magnetic field in which a magnetic force changes in the Y-axis direction in the X-Y plane is applied on both upper and lower sides of the X-Y plane on which the negative electrode travels in the X-axis direction, and drying the composite, thereby orienting the negative electrode active material in a direction perpendicular to the negative electrode current collector. Also, after the negative electrode composite is applied to the negative electrode current collector, a magnetic field may be applied during the drying process and the pores within the negative electrode composite layer may be oriented.

In an embodiment, the applied magnetic field may have a maximum magnetic force of 4,000G or more, for example, 4,500G or more, 5,000G or more, 5,500G or more, 6,000G or more, 6,500G or more, 7,000G or more, or 8,000G or more. The maximum magnetic force may be increased to improve the degree of orientation of the negative electrode active material within the negative electrode composite layer, and is not limited to any particular example, but the maximum magnetic force may be 12,000G or less, for example, 10,000G or less.

Also, the magnetic field may be applied to the negative electrode composite layer for 1 second or more, for example, 1.5 seconds or more, 2 seconds or more, 3 seconds or more, or 4 seconds or more, and may be applied for 30 seconds or less, for example, 25 seconds or less, 20 seconds or less, 15 seconds or less, or 10 seconds or less.

As another example, although not limited thereto, the negative electrode current collector coated with the negative electrode composite slurry may travel at a rate of, for example, 0.1 m/min to 50 m/min. As the traveling rate of the negative electrode current collector decreases, the time in which the negative electrode composite remains in the magnetic field may increase, and accordingly, the orientation of the negative electrode active material may be improved.

Viscosity of the negative electrode composite on the slurry may affect the orientation of the negative electrode active material due to the application of the magnetic field. For example, as the viscosity of the negative electrode composite decreases, the resistance to flow of the negative electrode composite may decrease even when the magnetic force and magnetic field application times are the same, and accordingly, it may be easy for the negative electrode active material to be oriented in the perpendicular direction with respect to the negative electrode current collector.

As an embodiment, the negative electrode composite slurry may have a viscosity of 300,000 cp or less when measured at 25°C and a shear rate of $0.1s^{-1}$. The viscosity of the negative electrode composite slurry may be, for example, 150,000 cp or less, 130,000 cp or less, 100,000 cp or less, 75,000 cp or less, 50,000 cp or less, 35,000 cp, or less 30,000 cp or less, 27,500 cp or less, or 25,000 cp or less.

A lower limit of the viscosity of the negative electrode composite slurry is not limited to any particular example, and may be 5,000cp (25°C and a shear rate $0.1s^{-1}$) or more. When the viscosity of the negative electrode composite slurry is too low, the negative electrode active material in the negative electrode composite slurry may easily precipitate.

The drying process may include removing a solvent included in the negative electrode composite. In this case, the drying method is not limited to any particular example, and a general drying method may be applied, and for example, various drying methods such as natural drying, heating drying, reduced pressure drying, and blowing drying may be used, and the process may be performed in several stages.

The drying process is not limited to any particular example, and may be performed for 20 to 300 seconds, for example, 40 to 240 seconds, or 60 to 200 seconds, within the range of, for example, 60 to 180°C, preferably 70 to 150°C.

After the drying process, a rolling process may be performed, and the thickness or density of the negative electrode composite layer may be adjusted through the rolling process. The rolling process may be performed by a general method such as a roll press method or a flat plate press method, and the negative electrode composite layer may be manufactured to have a thickness of 20 $\mu$m or more, 120 $\mu$m or less, for example, 40 $\mu$m or more, 100 $\mu$m or less, or 60 $\mu$m or more, or 80 $\mu$m or less per side, through the rolling process.

The negative electrode obtained by the rolling may be a high-density electrode having a density of the negative electrode composite layer of 1.5 g/cm$^3$ or more. For example, the density of the negative electrode composite layer may be 1.5 g/cm$^3$ or more, 2.2 g/cm$^3$ or less, or 1.5 g/cm$^3$ or more, or 2.0 g/cm$^3$ or less. When the electrode density of the negative electrode satisfies the above range, the output, lifespan, and high-temperature storage characteristic may be improved when manufacturing a battery.

In an embodiment, the negative electrode may be a negative electrode in which the degree of orientation of the negative electrode active material of the negative electrode composite layer is uniform. Accordingly, the negative electrode may have a value of I(110)/I(002) to be 0.25% or more, for example, I(110)/I(004) to be 9% or more, when analyzed by XRD. Also, the negative electrode may have a P/O value of less than 0.67 for the XRD analysis.

In an embodiment, the negative electrode composite layer may be formed by applying a negative electrode composite slurry including a negative electrode active material, a conductive material, a binder, and a solvent to the negative electrode current collector. Also, the negative electrode composite layer may further include an additive such as a thickener if desired.

The negative electrode active material may be a carbon-based negative electrode active material. The carbon-based negative electrode active material may be suitably used in an embodiment when the material is commonly used in manufacturing of a negative electrode of a secondary battery. The carbon-based negative electrode active material is not limited to any particular example, but may be artificial graphite, natural graphite, or a mixture of artificial graphite and natural graphite, and may be artificial graphite. Artificial graphite may further improve dispersibility of slurry and may improve a lifespan and a high-temperature storage characteristic.

A crystalline carbon-based active material, such as artificial graphite or a mixture of artificial graphite and natural graphite, may have more developed crystallographic properties of particles than an amorphous carbon-based active material. Accordingly, when such a crystalline carbon-based active material is used as a negative electrode active material, the orientation characteristic of the carbon material in the negative electrode composite layer with respect to an external magnetic field may be further improved, and further, the orientation of pores may be improved.

The shape of the artificial graphite or natural graphite may be amorphous, plate-like, flake-like, spherical, fiber-like, or a combination thereof. Also, when the artificial graphite and natural graphite are mixed and used, the mixing ratio may be 20:80 to 99:1, 50:50 to 97:3, or 70:30 to 95:5 by weight ratio.

The negative electrode active material may be used without any particular limitation as long as the material has a shape which may perform a function of absorbing and desorbing lithium ions, but in terms of improving the function of the negative electrode active material for a lithium secondary battery, an aspect ratio may typically be 20 or more. When applying a magnetic field while using the negative electrode active material having the above aspect ratio, the (002) plane of the negative electrode active material particles may be oriented in a direction perpendicular to the plane of the negative electrode current collector.

Also, the negative electrode active material may further include at least one of a silicon (Si)-based negative electrode active material, a tin (Sn)-based negative electrode active material, or a lithium vanadium oxide negative electrode active material, together with the carbon-based negative electrode active material. When the negative electrode active material further includes the above materials, the material may be included in a range of 1 to 50 weight% based on the total weight of the negative electrode active material.

The Si-based negative electrode active material may be Si, a Si-C composite, $SiO_x(0<x<2)$, or a Si-Q alloy. In the Si-Q alloy, Q may be an element selected from a group consisting of alkali metals, alkaline earth metals, Group 13 elements, Group 14 elements, Group 15 elements, Group 16 elements, transition metals, rare earth elements, and combinations thereof, other than Si, and specifically, selected from a group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and combinations thereof.

Generally, Si-based negative electrode active materials may have a characteristic of large volume change as a negative electrode active material. Here, generally, a silicon-based negative electrode active material may be included together with a carbon-based negative electrode active material, such as graphite, and in this case, carbon nanotubes may be included as a conductive material to prevent swelling due to volume expansion of the silicon-based negative electrode active material.

The Sn-based negative electrode active material may be Sn, $SnO_2$, or a Sn-R alloy. In the Sn-R alloy, R may be an element selected from a group consisting of alkali metals, alkaline earth metals, Group 13 elements, Group 14 elements, Group 15 elements, Group 16 elements, transition metals, rare earth elements, and combinations thereof, other than Sn and Si, and specifically, selected from a group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, In, Tl, Ge, P, As, Sb, Bi, S, Se, Te, Po, and combinations thereof. Also, at least one of the elements may be mixed with $SiO_2$ and used.

A content of the negative electrode active material in the negative electrode composite layer may be 94 to 98 weight% based on a total weight of the negative electrode composite layer.

The conductive material may be used to provide conductivity to the electrode, and may be used without limitation when the material is commonly used in a secondary battery, and for example, a conductive material including a carbon-based material such as natural graphite, artificial graphite, carbon black, acetylene black, Ketjen black, carbon fiber, or carbon nanotube; a metal-based material such as a metal powder or metal fiber such as copper, nickel, aluminum, or silver; a conductive polymer such as a polyphenylene derivative; or a mixture thereof may be used.

A content of the conductive material may be 0.1 to 3 weight% based on the total weight of the negative electrode composite layer.

The negative electrode composite layer may include a binder. The binder may bind the negative electrode active material particles to each other and may also bind the negative electrode active material to the negative electrode current collector. An aqueous binder may be used as the binder, but an example embodiment thereof is not limited thereto.

The aqueous binder may include styrene-butadiene rubber (SBR), acrylated styrene-butadiene rubber, acrylonitrile-butadiene rubber, acrylic rubber, butyl rubber, ethylene-propylene copolymer, polyepichlorohydrin, polyphosphazene, polyacrylonitrile, polystyrene, ethylene-propylene-diene copolymer, polyvinylpyridine, chlorosulfonated polyethylene, latex, polyester resin, acrylic resin, phenol resin, epoxy resin, polyvinyl alcohol resin, acrylate resin, or a combination thereof.

The content of the binder may be 1.5 to 3 weight % based on the total weight of the negative electrode composite layer.

The negative electrode composite layer may further include a thickener to impart viscosity together with the binder. As the thickener, cellulose compounds may be used, and for example, a mixture of one or more of carboxymethyl cellulose, hydroxypropyl methyl cellulose, methyl cellulose, or alkali metal salts thereof may be used. As the alkali metal, Na, K, or Li may be used. The thickener may be used in an amount of 0.1 to 3 parts by weight based on 100 parts by weight of the negative electrode active material.

The solvent may be an aqueous solvent such as water.

In an embodiment, as the negative electrode current collector, at least one selected from a group consisting of copper foil, nickel foil, stainless steel foil, titanium foil, nickel foam, copper foam, a polymer substrate coated with a conductive metal, and a combination thereof may be used. The thickness of the negative electrode current collector is not limited to any particular example, and may be, for example, 5 to 30 $\mu m$.

In the negative electrode provided by an embodiment, the negative electrode active material within the negative electrode composite layer may be oriented in the perpendicular direction with respect to the negative electrode current collector, such that lithium ions may be easily diffused into the electrode, the charge/discharge efficiency at high rates may be improved, thereby improving battery performance, such as improving rapid charging performance.

A secondary battery may be manufactured using the negative electrode in which the negative electrode active material as described above is oriented in a perpendicular direction. The secondary battery may be manufactured by manufacturing an electrode assembly by alternately stacking the negative electrode and the positive electrode as described above with a separator as a boundary therebetween, inserting and sealing the electrode assembly into a battery case, and injecting an electrolyte.

Hereinafter, the positive electrode may be described in greater detail. The positive electrode is not limited to any particular example, and may be formed by applying a slurry-like positive electrode composite to at least one surface of a positive electrode current collector, drying and rolling the composite to form a positive electrode composite layer. Any positive electrode commonly used in a secondary battery may be suitably used in an embodiment.

The positive electrode composite may include a positive electrode active material, a binder, and a solvent, and may include a conductive material and a thickener if desired.

A compound by which reversible insertion and de-insertion of lithium (lithiated intercalation compound) may be carried out may be used as the positive electrode active material. Specifically, one or more of a composite oxide of lithium and a metal selected from cobalt, manganese, nickel, and combinations thereof may be used.

As a more specific example, a layered lithium transition metal compound (oxide) represented by the general formula $LiMO_2$ may be used, wherein M may include at least one of transition metal elements such as Ni, Co, and Mn, and may further include another metal element or non-metal element. As the composite oxide, for example, a monolithic lithium-transition metal composite oxide including one transition metal element, a binary lithium-transition metal composite oxide including two transition metal elements, and a ternary lithium-transition metal composite oxide including Ni, Co and Mn as transition metal elements as constituent elements may be used, and specifically, $Li_xMn_{1-y}M_yA_2$, $Li_xMn_{1-y}M_yO_{2-z}X_z$, $Li_xMn_2O_{4-z}X_z$, $Li_xMn_{2-y}M_yM'_zA_4$, $Li_xCo_{1-y}M_yA_2$, $Li_xCo_{1-y}M_yO_{2-z}X_z$, $Li_xNi_{1-y}M_yA_2$, $Li_xNi_{1-y}M_yO_{2-z}X_z$, $Li_xNi_{1-y}Co_yO_{2-z}X_z$, $Li_xNi_{1-y-z}Co_yM_zA_\alpha$, $Li_xNi_{1-y-z}Co_yM_zO_{2-\alpha}X_\alpha$, $Li_xNi_{1-y-z}Mn_yM_zA_\alpha$, $Li_xNi_{1-y-z}Mn_yM_zO_{2-\alpha}X$ (in each equation, $0.9{\leq}x{\leq}1.1$, $0{\leq}y{\leq}0.5$, $0{\leq}z{\leq}0.5$, $0{\leq}\alpha{\leq}2$, M and M' may be the same or different, and may be selected from a group consisting of Mg, Al, Co, K, Na, Ca, Si, Ti, Sn, V, Ge, Ga, B, As, Zr, Mn, Cr, Fe, Sr, V and rare earth elements, A may be selected from a group consisting of O, F, S and P, and X may be selected from a group consisting of F, S and P), and for example, a ternary lithium transition metal composite oxide such as $Li(Ni_{1/3}Co_{1/3}Mn_{1/3})O_2$ may be used.

Also, a lithium transition metal compound (oxide) represented by the general formula $Li_2MO_3$, wherein M includes at least one of transition metal elements including Mn, Fe, and Co, may be included, and other metal elements or non-metal elements may be further included, for example, $Li_2MnO_3$ and $Li_2PtO_3$ may be mentioned.

Also, the positive electrode active material may be a solid solution of the $LiMO_2$ and the $Li_2MO_3$, for example, a solid solution represented by $0.5LiNiMnCoO_2$-$0.5Li_2MnO_3$.

Further, a material having a coating layer on the surface of the positive electrode active material may be used, or a compound having the compound and the coating layer may be mixed and used. The coating layer may include at least one coating element compound selected from a group consisting of oxides, hydroxides, oxyhydroxides, oxycarbonates, and hydroxycarbonates of the coating element. The compounds forming the coating layers may be amorphous or crystalline. The coating elements included in the coating layer may include Mg, Al, Co, K, Na, Ca, Si, Ti, V, Sn, Ge, Ga, B, As, Zr, or a mixture thereof.

In the positive electrode, the positive electrode active material may be 90 to 98 weight% based on the solid weight of the positive electrode composite.

The binder may bind the positive electrode active material particles to each other and may also bind the positive electrode active material to the positive electrode current collector, and the content of the binder may be 1.5 to 5 weight% based on the solid weight of the positive electrode composite. The binder may include, for example, polyvinyl alcohol, carboxymethyl cellulose, hydroxypropyl cellulose, diacetyl cellulose, polyvinyl chloride, carboxylated polyvinyl chloride, polyvinyl fluoride, a polymer including ethylene oxide, polyvinylpyrrolidone, polyurethane, polytetrafluoroethylene, polyvinylidene fluoride, polyethylene, polypropylene, styrene-butadiene rubber, acrylated styrene-butadiene rubber, epoxy resin, nylon, or the like.

The positive electrode composite slurry may also include a thickener to impart viscosity together with the binder. The thickener may be the same as the thickener included in the negative electrode composite, and may be included in a content of 0.1 to 3 parts by weight based on 100 parts by weight of the positive electrode active material.

The conductive material may be used to provide conductivity to the positive electrode. Any electronically conductive material commonly used in the positive electrode of a secondary battery may be suitably used, and the conductive material used in the negative electrode composite may be used. The conductive material may be used in a content of 0.1 to 5 weight% based on the solid weight of the positive electrode composite.

The solvent may be an aqueous solvent such as water, as well as a non-aqueous solvent. As the non-aqueous solvent, any solvent commonly used in manufacturing of a positive electrode composite of a secondary battery may be used in an embodiment, for example, N-methyl-2-pyrrolidone (NMP), but an example embodiment thereof is not limited thereto.

The positive electrode current collector may be a metal having good conductivity, such as aluminum, nickel, titanium, stainless steel, or the like, may be used, and may be in various forms such as a sheet shape, a thin shape, a mesh shape, or the like. The thickness of the positive electrode current collector is not limited to any particular example, and may be, for example, 5 to 30 $\mu$m.

As described above, by applying the positive electrode composite to at least one surface of the positive electrode current collector, and drying and rolling the composite, a positive electrode in which a positive electrode composite layer is formed on the positive electrode current collector may be manufactured.

The drying and rolling process may be performed by the same method as in the manufacturing of the negative electrode, and a detailed description thereof may not be provided.

A separator interposed between the positive electrode and the negative electrode may be a porous sheet, nonwoven fabric, or the like, and may be a multilayer film of polyethylene, polypropylene, polyvinylidene fluoride, or two or more layers thereof, a mixed multilayer film of two layers of polyethylene/polypropylene, a mixed multilayer film of three layers of polyethylene/polypropylene/polyethylene, a mixed multilayer film of three layers of polypropylene/polyethylene/polypropylene, or the like, and further, the porous sheet, nonwoven fabric, or the like may have a porous heat-resistant layer on one or two opposite surfaces. The separator is not limited to any particular example, but may be used with a thickness of, for example, about 10 to 40 $\mu$m.

The electrolyte may include a non-aqueous organic solvent and a lithium salt. The non-aqueous organic solvent may act as a medium through which ions involved in the electrochemical reaction of the battery may move, and for example, carbonate-based, ester-based, ether-based, ketone-based, alcohol-based, or aprotic solvents, commonly used in lithium ion secondary batteries, may be used. The organic solvent may be used alone or in combination of one or more solvents. Specifically, propylene carbonate (PC), ethylene carbonate (EC), diethyl carbonate (DEC), dimethyl carbonate (DMC), ethyl methyl carbonate (EMC), methylpropyl carbonate, dipropyl carbonate, fluoroethylene carbonate (FEC), dimethyl sulfur oxide, acetonitrile, dimethoxyethane, diethoxyethane, vinylene carbonate, sulfolane, gamma-butyrolactone, propylene sulfite, and tetrahydrofuran may be used.

The lithium salt may be dissolved in an organic solvent and may act as a source of lithium ions in the battery, may enable the basic operation of a lithium ion secondary battery, and may promote the movement of lithium ions between the positive electrode and the negative electrode. As the lithium salt, a lithium salt commonly used in electrolytes for a lithium secondary battery may be used, and may be represented by $Li^+X^-$. The anions of the lithium salt are not limited to any particular example, and may include $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_3)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$.

Specifically, one or more selected from a group consisting of $LiPF_6$, $LiBF_4$, $LiSbF_6$, $LiAsF_6$, $LiN(SO_2C_2F_5)_2$, $Li(CF_3SO_2)_2N$, $LiN(SO_3C_2F_5)_2$, $LiC_4F_9SO_3$, $LiClO_4$, $LiAlO_2$, $LiAlCl_4$, $LiN(C_xF_{2x+1}SO_2)(C_yF_{2y+1}SO_2)$ (wherein, x and y may be independently be an integer from 1 to 20), $LiCl$, $LiI$ and $LiB(C_2O_4)_2$ (lithium bis(oxalato) borate: LiBOB) may be used.

A concentration of the lithium salt is not limited to any particular example, but may be within the range of 0.1 M to 2.0 M. The electrolyte may further include a vinylene carbonate or ethylene carbonate compound if desired to improve a battery lifespan.

In an embodiment, in the negative electrode, the negative electrode active material within the negative electrode composite layer may be oriented perpendicularly to the negative electrode current collector, such that lithium ions may easily diffuse into the electrode during the process of charging/discharging the secondary battery, battery resistance may be lowered, and charging and discharging efficiency may be improved especially at high rates, thereby improving cycle life characteristics and fast charging performance. In another embodiment, separation between the negative electrode current collector and the negative electrode composite layer may be prevented during the charge/discharge process at a high rate.

In another embodiment, a lithium secondary battery in which each of the above-mentioned negative electrodes and the positive electrodes are alternately laminated with a separator as a boundary therebetween may be provided. A lithium secondary battery in an embodiment may be manufactured by manufacturing an electrode assembly having a separator interposed between the positive electrode and the negative electrode based on an embodiment, accommodating the electrode assembly in a battery case, and injecting an electrolyte therein. There may be no particular limitation on the exterior shape of the lithium secondary battery in an embodiment, but the battery may be a pouch-type battery, a cylindrical or square battery using a can, or a coin-type battery.

Hereinafter, the disclosed technology may be described more specifically by referring to an embodiment. The embodiments as below are specific examples, and accordingly, are not intended to limit the disclosed technology.

**Comparative example 1**

Artificial graphite, styrene butadiene rubber (SBR), and carboxymethyl cellulose (CMC) were mixed in a mass ratio of 97.8:1.2:1.0, the mixture was dispersed in distilled water from which ions were removed, and a negative electrode composite was prepared in the form of a slurry.

The negative electrode composite in the form of a slurry was coated on a copper foil with a width of 150 mm using a slot die such that the loading weight was 12.5 mg/cm$^2$.

The copper foil coated with the negative electrode composite was passed through a drying device, the negative electrode composite was dried, and the negative electrode was manufactured.

**Comparative example 2**

As neodymium (Nd) magnets, vertical unit magnets having a length of 50 mm and a thickness (D) of 20 mm were arranged in the same form as illustrated in FIG. 1, and a lower magnet plate having a size of 250 mm × 250 mm was manufactured.

Also, an upper magnet plate was manufactured in the same manner as the lower magnet plate.

In this case, the lower magnet plate and the upper magnet plate were disposed such that polarities of the surfaces facing each other were opposite to each other, and the lower magnet plate and the upper magnet plate were spaced apart from each other by 40 mm, thereby manufacturing the magnet module. The magnet module was designed to be installed immediately before the drying device such that the drying process was performed immediately after the orientation of the negative electrode active material.

Artificial graphite, styrene butadiene rubber (SBR), and carboxymethyl cellulose (CMC) were mixed in a mass ratio of 97.8:1.2:1.0, the mixture was dispersed in distilled water from which ions had been removed, and a negative electrode composite was prepared in the form of a slurry.

The slurry-type negative electrode composite was coated on copper foil with a width of 150 mm using a slot die such that the loading weight was 12.5 mg/cm$^2$.

The copper foil coated with the negative electrode composite was passed through the magnet module under a magnetic field to perform magnetic orientation, and the negative electrode composite was dried, thereby manufacturing a negative electrode.

**Comparative example 3**

As neodymium magnets, a vertical unit magnet and a horizontal unit magnet with a length and width of 50 mm and a thickness of 20 mm were used.

The vertical unit magnet and the horizontal unit magnet were arranged such that the direction of the magnetic force line rotated 90 degrees in the X-axis direction along which the negative electrode travels, as illustrated in FIG. 11.

Accordingly, a magnet plate having a total size of 250 mm × 250 mm was manufactured.

The magnet plate was disposed below the negative electrode traveling surface and a magnet module was manufactured.

The magnet module was designed to be installed immediately before the drying device such that the drying process was performed immediately after orientation of the negative electrode active material.

The negative electrode was manufactured by drying the negative electrode composite after allowing the magnet module to pass through for 2 seconds to perform a magnetic orientation in the same manner as in comparative example 2.

**Comparative example 4**

As neodymium magnets, the vertical unit magnet and the horizontal unit magnet having a length and width of 50 mm and a thickness of 20 mm were used.

The vertical unit magnet and the horizontal unit magnet were arranged such that the direction of the magnetic force line rotated 90 degrees in the Y-axis direction, which is perpendicular to the X-axis direction in which the negative electrode travels, as illustrated in FIG. 12.

Accordingly, a lower magnet plate having a total size of 250 mm × 250 mm was manufactured.

Also, an upper magnet plate was manufactured in the same manner as the lower magnet plate. In this case, the lower magnet plate and the upper magnet plate were disposed such that polarities of the surfaces facing each other were opposite to each other.

A spacing between the lower magnet plate and the upper magnet plate was configured to be 40 mm, and a magnet module was manufactured.

The magnet module was designed to be installed immediately before the drying device such that the drying process was performed immediately after the orientation of the negative electrode active material.

By the same method as comparative example 2, the negative electrode composite passed through a magnet module for 2 seconds to perform magnetic orientation and the negative electrode composite was dried, and the negative electrode was manufactured.

**Embodiment 1**

As neodymium magnets, a vertical unit magnet and a horizontal unit magnet having a length and width of 50 mm and a thickness of 20 mm were used. As illustrated in FIG. 6, two magnet modules were manufactured by arranging the direction of the magnetic force line in the Y-axis direction to rotate 90 degrees relative to the X-Y plane where the negative electrode travels in the X-axis direction.

The magnet modules were sequentially disposed in the X-axis direction to manufacture the lower magnet plate. In this case, from the second magnet module, the module were disposed by moving d=50 mm from the adjacent magnet module in the Y-axis direction. Accordingly, a lower magnet plate having the same shape as in FIG. 6 was manufactured.

Also, an upper magnet plate was manufactured in the same manner as the lower magnet plate, and the unit magnets were arranged such that polarities of the surfaces facing each other of the lower magnet plate and the upper magnet plate were opposite to each other, thereby manufacturing the upper magnet plate.

By separating the lower magnet plate and the upper magnet plate with a spacing of 40 mm therebetween, a magnetic field application device was manufactured.

The magnetic field application device was installed immediately before the drying device such that the drying process was performed immediately after the orientation of the negative electrode active material.

Artificial graphite, styrene butadiene rubber (SBR), and carboxymethyl cellulose (CMC) were mixed in a mass ratio of 97.8:1.2:1.0, and dispersed in distilled water from which ions were removed, and a negative electrode composite in was prepared in the form of a slurry.

The negative electrode composite in the form of a slurry was coated on a copper foil with a width of 150 mm using a slot die such that the loading weight was 12.5 mg/cm$^2$.

The copper foil was passed through the magnetic field application device for 4 seconds under a magnetic field, and the negative electrode composite was dried and each negative electrode was manufactured.

**Embodiment 2**

Other than the configuration in which the negative electrode was manufactured by manufacturing the manufacture including the upper and lower magnet plates including 5 magnet modules by adjusting d=20mm in embodiment 1, the negative electrode were manufactured in the same manner as in embodiment 1.

**Material Evaluation**

**[P/O]**

For each negative electrode manufactured in comparative examples 1 to 4 and embodiments 1 to 2, the preferred orientation (P/O), which indicates the degree of orientation of the negative electrode active material, was measured using XRD at 10 points with a 10mm spacing in the width direction (Y-axis direction) of the negative electrode.

It is indicated that the smaller the P/O value, the better the degree of vertical orientation of the negative electrode active material may be.

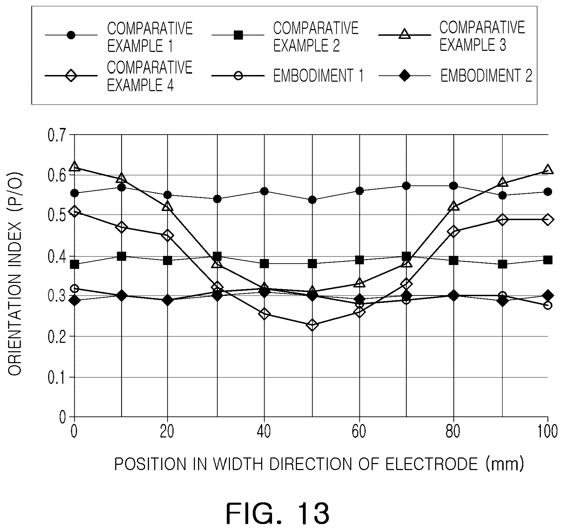

The measured P/O values are illustrated in FIG. 13.

As indicated in FIG. 13, the negative electrodes in embodiments 1 and 2 in which the magnet plate was applied based on an embodiment exhibited the most excellent degree of vertical orientation, and had a uniform degree of orientation distribution in the width direction.

In some embodiments, the magnetic force intensity may be maximized, such that the vertical orientation of the negative electrode active material may improve even within a relatively short electrode traveling time.

Also, even though a magnetic field is applied during the process of manufacturing a negative electrode, the negative electrode may have a uniform orientation in the traveling direction and the width direction, and accordingly, the cell charging performance of the battery may further improve.

Only specific examples of implementations of predetermined embodiments are described. Variations, improvements and enhancements of the disclosed embodiments and other embodiments may be made with respect to the disclosure of this patent document.

The present disclosure may also relate to the following aspects.

Aspect 1) An apparatus for manufacturing a negative electrode may comprise a pair of magnet plates including an upper magnet plate and a lower magnet plate disposed above and below an X-Y plane along which a negative electrode is moved in an X-axis direction in manufacturing the negative electrode, wherein each of the magnet plates includes (N+1) magnet modules including a plurality of first vertical unit magnets having a magnetic force direction directed in a positive Z-axis direction, a plurality of second vertical unit magnets having a magnetic force direction directed in a negative Z-axis direction, a plurality of first horizontal unit magnets having a magnetic force direction directed in a negative Y-axis direction, and a plurality of second horizontal unit magnets having magnetic force direction directed in a positive Y-axis direction, wherein the first and second vertical unit magnets and first and second horizontal unit magnets are arranged in a predetermined pattern in a Y-axis direction, where N is an integer equal to or greater than 1, wherein the magnet modules are arranged in an X-axis direction parallel to the X-Y plane, wherein, when a Y-coordinate of a first unit magnet of a first magnet module, among the magnet modules, is 0, an absolute value of a Y-coordinate of a first unit magnet of an (N+1)th magnet module is N×d, and wherein the first unit magnet of the (N+1)th magnet module have an identical type to a first unit magnet of an Nth magnet module, and is offset in the Y-axis direction by a distance (d) smaller than a width of the unit magnet in the Y-axis direction, from a linear line parallel to an X-axis direction passing through an origin point ($O^N$) of the Nth magnet module.

Aspect2) In aspect 1, the distance (d) may be (n) times a value defined by any one of equations (1) to (5), where (n) is a positive integer.:

$$((LY1/2 \ + ((LY2+LY4))/2 \ + LY3/2))/((N+1)) \quad (1)$$

$$((LY1/2 \ + LY2 + LY3/2))/((N+1)) \quad (2)$$

$$((LY1/2 \ + LY4 + LY3/2))/((N+1)) \quad (3)$$

$$((LY1 + LY2))/((N+1)) \quad (4)$$

$$((LY1 + LY4))/((N+1)) \quad (5)$$

where LY1 is a length in the Y-axis direction of the first vertical unit magnet, LY3 is a length in the Y-axis direction of the second vertical unit magnet, LY2 is a length in the Y-axis direction of the first horizontal unit magnet, LY4 is a length in the Y-axis direction of the second horizontal unit magnet, and (N+1) is a number of magnet modules included in each of the magnet plates.

Aspect3) In aspect 1 or 2, the magnet module may have a unit magnet arrangement pattern in which a magnetic force direction of the unit magnets changes by 90 degrees in the Y-axis direction.

Aspect4) In anyone of aspects 1 to 3, the (N+1)th magnet module may have a same unit magnet arrangement pattern as the Nth magnet module.

Aspect5) In anyone of aspects 1 to 4, a last magnet module included in each of the magnet plates may be offset in the Y-axis direction by 2(n) unit magnets with respect to the first magnet module, where (n) is a positive integer.

Aspect6) In anyone of aspects 1 to 5, each magnet module may have horizontal unit magnets disposed on two opposite side ends.

Aspect7) In anyone of aspects 1 to 6, in the upper magnet plate and the lower magnet plate, magnets having opposite polarities may face each other.

Aspect8) In anyone of aspects 1 to 7, a magnetic force of each of the magnet plates varies in the Y-axis direction.

Aspect9) In anyone of aspects 1 to 8, unit magnets included in a magnet module of each of the magnet plates may have a same length (LX) in the X-axis direction.

Aspect10) In anyone of aspects 1 to 9, each of the magnet plates may include: three or more long magnet modules having a length equal to a Y-axis direction length of each of the magnet plates; and at least one short magnet module having a length shorter than the Y-axis direction length of each of the magnet plates, and wherein two opposite side ends of the long magnet modules are aligned on a linear line parallel to the X-axis of each of the magnet plates.

Aspect11) In aspect 11, a difference between a length of the short magnet module and a length in the Y-axis direction of each of the magnet plates may be less than or equal to a length of one unit magnet.

Aspect 12) In aspect 10 or 11, two opposite side ends of the short magnet module are spaced apart from an alignment line of the long magnet module.

Aspect 13) In anyone of aspects 10 to 12, vertical unit magnets may be disposed on two opposite side ends of the at least one short magnet module.

Aspect 14) a portion of a vertical unit magnet may be disposed at two opposite side ends of at least one of the three or more long magnet modules, and a portion of the vertical unit magnet has a length smaller than a length of the first vertical unit magnet or the second vertical unit magnet.

Aspect 15) a portion of each of vertical unit magnets disposed on two opposite side ends may have an identical length or different lengths.

**Claims**

1. An apparatus for manufacturing a negative electrode, the apparatus comprising:

a pair of magnet plates including an upper magnet plate and a lower magnet plate disposed above and below an X-Y plane along which a negative electrode is moved in an X-axis direction in manufacturing the negative electrode,

wherein each of the magnet plates includes (N+1) magnet modules including a plurality of first vertical unit magnets having a magnetic force direction directed in a positive Z-axis direction, a plurality of second vertical unit magnets having a magnetic force direction directed in a negative Z-axis direction, a plurality of first horizontal unit magnets having a magnetic force direction directed in a negative Y-axis direction, and a plurality of second horizontal unit magnets having magnetic force direction directed in a positive Y-axis direction, wherein the first and second vertical unit magnets and first and second horizontal unit magnets are arranged in a predetermined pattern in a Y-axis direction, where N is an integer equal to or greater than 1,

wherein the magnet modules are arranged in an X-axis direction parallel to the X-Y plane,

wherein, when a Y-coordinate of a first unit magnet of a first magnet module, among the magnet modules, is 0, an absolute value of a Y-coordinate of a first unit magnet of an (N+1)th magnet module is N×d, and

wherein the first unit magnet of the (N+1)th magnet module have an identical type to a first unit magnet of an Nth magnet module, and is offset in the Y-axis direction by a distance (d) smaller than a width of the unit magnet in the Y-axis direction, from a linear line parallel to an X-axis direction passing through an origin point ($O^N$) of the Nth magnet module.

2. The apparatus of claim 1, wherein the distance (d) is (n) times a value defined by any one of equations (1) to (5), where (n) is a positive integer.:

$$\frac{(LY1/2 + (LY2+LY4)/2 + LY3/2)}{(N+1)} \quad (1)$$

$$\frac{(LY1/2 + LY2 + LY3/2)}{(N+1)} \quad (2)$$

$$\frac{(LY1/2 + LY4 + LY3/2)}{(N+1)} \quad (3)$$

$$\frac{(LY1 + LY2)}{(N+1)} \quad (4)$$

$$\frac{(LY1 + LY4)}{(N+1)} \quad (5)$$

where LY1 is a length in the Y-axis direction of the first vertical unit magnet, LY3 is a length in the Y-axis direction of the second vertical unit magnet, LY2 is a length in the Y-axis direction of the first horizontal unit magnet, LY4 is a length in the Y-axis direction of the second horizontal unit magnet, and (N+1) is a number of magnet modules included in each of the magnet plates.

3. The apparatus of claim 1 or 2, wherein the magnet module has a unit magnet arrangement pattern in which a magnetic force direction of the unit magnets changes by 90 degrees in the Y-axis direction.

4. The apparatus of anyone of claim 1 to 3, wherein the (N+1)th magnet module has a same unit magnet arrangement pattern as the Nth magnet module.

5. The apparatus of anyone of claim 1 to 4, wherein a last magnet module included in each of the magnet plates is offset in the Y-axis direction by 2(n) unit magnets with respect to the first magnet module, where (n) is a positive integer.

6. The apparatus of anyone of claim 1 to 5, wherein each magnet module has horizontal unit magnets disposed on two opposite side ends.

7. The apparatus of anyone of claim 1 to 6, wherein, in the upper magnet plate and the lower magnet plate, magnets having opposite polarities face each other.

8. The apparatus of anyone of claim 1 to 7, wherein a magnetic force of each of the magnet plates varies in the Y-axis direction.

9. The apparatus of anyone of claim 1 to 8, wherein unit magnets included in a magnet module of each of the magnet plates have a same length (LX) in the X-axis direction.

10. The apparatus of anyone of claim 1 to 9,

   wherein each of the magnet plates includes: three or more long magnet modules having a length equal to a Y-axis direction length of each of the magnet plates; and at least one short magnet module having a length shorter than the Y-axis direction length of each of the magnet plates, and
   wherein two opposite side ends of the long magnet modules are aligned on a linear line parallel to the X-axis of each of the magnet plates.

11. The apparatus of claim 10, wherein a difference between a length of the short magnet module and a length in the Y-axis direction of each of the magnet plates is less than or equal to a length of one unit magnet.

12. The apparatus of claim 10 or 11, wherein two opposite side ends of the short magnet module are spaced apart from an alignment line of the long magnet module.

13. The apparatus of anyone of claim 10 to 12, wherein vertical unit magnets are disposed on two opposite side ends of the at least one short magnet module.

14. The apparatus of anyone of claim 10 to 13, wherein a portion of a vertical unit magnet is disposed at two opposite side ends of at least one of the three or more long magnet modules, and a portion of the vertical unit magnet has a length smaller than a length of the first vertical unit magnet or the second vertical unit magnet.

15. The apparatus of claim 14, wherein a portion of each of vertical unit magnets disposed on two opposite side ends has an identical length or different lengths.

| //// : S | ·· : N |
|---|---|

Direction of
magnetic force

FIG. 1

| //// : S | ·· : N |
|---|---|

(1)    (2)    (3)    (4)    · · ·

Direction of
magnetic force

FIG. 2

FIG. 3A

FIG. 3B

FIG. 4

: S    : N

MAGNETIC FORCE DECREASE

(11)

MAGNETIC
FORCE
INCREASE

D

(13)

(1)     (2)     (3)     (4)     · · ·
LY1     LY2     LY1     LY2

MAGNETIC FORCE DECREASE

FIG. 5A

STRENGTH OF
MAGNETIC FORCE

FIG. 5B

FIG. 6

FIG. 7

FIG. 8

FIG. 9

FIG. 10

FIG. 11

FIG. 12

FIG. 13

Europäisches
Patentamt

European
Patent Office

Office européen
des brevets

# EUROPEAN SEARCH REPORT

**Application Number**

EP 25 18 1901

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DE 20 2023 107690 U1 (SK ON CO LTD [KR]) 23 April 2024 (2024-04-23) * paragraphs [0055] - [0093]; figures 1-7 * ----- | 1-15 | INV. H01M4/04 H01M4/139 |
| A | WO 2024/080618 A1 (LG ENERGY SOLUTION LTD [KR]) 18 April 2024 (2024-04-18) * paragraphs [0060] - [0066]; figure 3 * ----- | 1-15 | |

**TECHNICAL FIELDS SEARCHED (IPC)**

H01M

The present search report has been drawn up for all claims

| Place of search | Date of completion of the search | Examiner |
|---|---|---|
| Munich | 30 October 2025 | Spingler, Franz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 18 1901

This annex lists the patent family members relating to the patent documents cited in the above-mentioned European search report.
The members are as contained in the European Patent Office EDP file on
The European Patent Office is in no way liable for these particulars which are merely given for the purpose of information.

30-10-2025

| Patent document cited in search report | Publication date | Patent family member(s) | | Publication date |
|---|---|---|---|---|
| DE 202023107690 U1 | 23-04-2024 | CN | 118522522 A | 20-08-2024 |
| | | CN | 222126584 U | 06-12-2024 |
| | | DE | 202023107690 U1 | 23-04-2024 |
| | | EP | 4418385 A2 | 21-08-2024 |
| | | KR | 20240129371 A | 27-08-2024 |
| | | US | 2024291039 A1 | 29-08-2024 |
| WO 2024080618 A1 | 18-04-2024 | CN | 118284994 A | 02-07-2024 |
| | | EP | 4421901 A1 | 28-08-2024 |
| | | JP | 7726603 B2 | 20-08-2025 |
| | | JP | 2024540560 A | 31-10-2024 |
| | | KR | 20240051549 A | 22-04-2024 |
| | | US | 2024420876 A1 | 19-12-2024 |
| | | WO | 2024080618 A1 | 18-04-2024 |

For more details about this annex : see Official Journal of the European Patent Office, No. 12/82